# EUROPÄISCHE PATENTSCHRIFT

(11) **EP 4 500 404 B1**
(45) Veröffentlichungstag und Bekanntmachung des Hinweises auf die Patenterteilung: **29.04.2026**
(21) Anmeldenummer: 23716283.9
(22) Anmeldetag: 30.03.2023
(51) Int. Cl.: G06N 10/40, B82B 1/00, B82Y 10/00, G06F 21/62

(54) **VERFAHREN ZUM ERSTELLEN EINES QUANTEN-DATENTOKENS**
METHOD FOR GENERATING A QUANTUM DATA TOKEN
PROCÉDÉ DE GÉNÉRATION D'UN JETON DE DONNÉES QUANTIQUES

(30) Priorität: 30.03.2022 DE 102022107528
(43) Veröffentlichungstag der Anmeldung: 05.02.2025
(73) Patentinhaber: Universität Kassel, 34125 Kassel (DE)
(72) Erfinder: SINGER, Kilian Talo Theodor, 34134 Kassel (DE); POPOV, Cyril, 34123 Kassel (DE); NAYDENOV, Boris, 10249 Berlin (DE)
(74) Vertreter: Kleine, Hubertus
(86) Internationale Anmeldenummer: PCT/EP2023/058326
(87) Internationale Veröffentlichungsnummer: WO 2023/187073

(56) Entgegenhaltungen:
- VIKAS K SEWANI ET AL: "Coherent control of NV- centers in diamond in a quantum teaching lab", ARXIV.ORG, CORNELL UNIVERSITY LIBRARY, 201 OLIN LIBRARY CORNELL UNIVERSITY ITHACA, NY 14853, 26 July 2020 (2020-07-26), XP081715144
- MCCLOSKEY D J ET AL: "Enhanced widefield quantum sensing with nitrogen-vacancy ensembles using diamond nanopillar arrays", ARXIV.ORG, CORNELL UNIVERSITY LIBRARY, 201 OLIN LIBRARY CORNELL UNIVERSITY ITHACA, NY 14853, 7 February 2019 (2019-02-07), XP081026278
- ITANO W M ET AL: "Quantum projection noise: Population fluctuations in two level systems", PHYSICAL REVIEW A, vol. 47, no. 5, 1 May 1993 (1993-05-01), pages 1 - 17, XP093056333, Retrieved from the Internet <URL:https://journals.aps.org/pra/pdf/10.1103/PhysRevA.47.3554> [retrieved on 20230621]

## Beschreibung

Die Erfindung betrifft ein Verfahren zum Erstellen eines Quanten-Datentokens auf Basis eines Systems mit einer Vielzahl von Qubits, wobei jeweils eine Anzahl (N) von Qubits der Vielzahl von Qubits zu einem Ensemble zusammengefasst wird und eine Informationseinheit bildet und wobei die Qubits des Quanten-Datentokens einem Magnetfeld ausgesetzte Kernspins sind und die einzelnen Qubits des Ensembles jeweils in genau einen vorbestimmten gleichen Quantenzustand gebracht werden.

Datentoken stellen eine im allgemeinen kurze Folge von Datenwerten dar, die als Authentifizierung-, Zugangs- und/oder Freischaltungsinformationen im elektronischen Datenverkehr eingesetzt werden.

Datentoken können zum Beispiel durch Verschlüsselungsalgorithmen geschützt sein, um eine unautorisierte Nutzung oder ein unautorisiertes Erstellen von Kopien zu verhindern. Ein solches Datentoken kann offen versendet werden, beispielsweise über Datennetzwerke.

Eine weitere Möglichkeit besteht darin, ein Datentoken auf einem physikalischen Trägermaterial bereitzustellen, das physikalisch transportiert wird, um die enthaltenen Informationen weiter zu geben. In diesem Fall fungiert das Datentoken als eine Art mechanisch transportierbarer und übertragbarer Schlüssel. Ein solches Datentoken in Art eines Schlüssels ist jedoch nur dann sicher, wenn ein nicht autorisiertes Auslesen und Kopieren verhindert werden kann.

Mit der Möglichkeit, Informationen in Quantensystemen zum Beispiel in Form von Qubits zu speichern, ist es denkbar, Datentokens auf der Basis von Quanteninformationssystemen aufzubauen. Diese werden dann auch als "Quanten-Datentoken" oder "Quantentoken" bezeichnet.

Die Schrift US 9,361,962 B1 beschreibt beispielsweise ein Quanteninformationssystem mit einer Mehrzahl von manipulierbaren Qubits auf Basis eines Festkörpers. Dazu werden als Qubits Farbzentren in einem Diamantkristall genutzt. Die Farbzentren sind von benachbarten Kristalldefekten gebildet, bei denen eine Fehlstelle benachbart zu einem Stickstoff-Fremdatom vorliegt. Diese speziellen Farbzentren werden auch NV (nitrogen vacancy) - Zentrum genannt. Gegenüber bisherigen Systemen, die extrem niedrige Temperaturen und aufwändige Vakuumanlagen benötigen, um einzelne Qubits zu speichern und auszulesen, bieten die NV-Zentren eine praktisch einsetzbare Möglichkeit zur Implementierung von Quanteninformationssystemen. Gespeichert ist die Information dabei letztlich in dem Kernspin-Zustand eines Gitter- oder Fremdatoms im Kristall. Dabei wurden Relaxationszeiten der Kernspins von Atomkernen im Diamantgitter unter optimalen Bedingungen (tiefe Temperaturen und hohen Magnetfeldern) bis zu 36 Stunden erreicht, was für viele praktische Anwendungen auch bereits ausreichend ist.

Auch die Artikel "Coherent control of NV-centers in diamond in a quantum teaching lab", Vikas K. Sewani et al., arXiv.org, Cornell University Library, 201 OLIN Library Cornell University Itaca, NY 14853, 26.07.2020, und "Enhanced widefield quantum sensing with nitrogen-vacancy ensembles using diamond nanopillar arrays", D. J. McCloskey et al., arXiv.org, Cornell University Library, 201 OLIN Library Cornell University Itaca, NY 14853, 7. Februar 2019 beschreiben Quanteninformationssysteme mit einer Mehrzahl von manipulierbaren Qubits. Eine Anzahl solcher Qubits kann zu einem Ensemble zusammengefasst werden und kann dann als eine Informationseinheit der eingangs genannten Art angesehen werden.

In dem Artikel "Quantum projection noise: Population fluctuations in two-level systems", W. M. Itano et al., Physical Review A, Bd. 47, Nr. 5, 01.05.1993, werden Untersuchungen zu Hg- und Be-Ionen vorgestellt, die in einer Hochfrequenz-Ionenfalle gehalten werden und die in verschiedenen Hyperfeinstruktur-Zuständen präpariert sind. Es zeigen sich Fluktuationen in der Besetzung der verschiedenen Zustände, die als "Quanten-Projektionsrauschen" bezeichnet werden.

Wenn zum Speichern der Informationen einzelne Qubits verwendet werden, garantieren fundamentale Gesetze der Quantenphysik, insbesondere das "No Cloning" Theorem, dass ein solches Quantentoken nicht kopiert werden kann, ohne seine gespeicherte Information zu zerstören.

Die Manipulation zum Erstellen und die Detektion und Kontrolle einzelner Quantenzustände ist technologisch jedoch sehr anspruchsvoll und erfordert hohe Präzision.

Ausgehend von diesem Stand der Technik ist es eine Aufgabe der vorliegenden Erfindung, ein Verfahren zum Erstellen eines Quantentokens anzugeben, das ebenfalls geschützt durch physikalische Grundprinzipien nicht unautorisiert auslesbar und kopierbar ist und das dennoch apparativ einfach erstellt und ausgelesen werden kann.

Diese Aufgabe wird gelöst durch ein Verfahren zum Erstellen eines Quantentokens mit den Merkmalen des unabhängigen Anspruchs. Vorteilhafte Ausgestaltungen und Weiterbildungen sind Gegenstand der abhängigen Ansprüche.

Bei einem erfindungsgemäßen Verfahren der eingangs genannten Art wird die Anzahl von Qubits in einem Ensemble so gewählt, dass ein Quantenzustand eines Subensembles, das maximal die Hälfte der Qubits des Ensembles aufweist, aufgrund des Quantenprojektionsrauschens nicht bestimmbar ist.

Information wird also nicht auf der Basis eines einzelnen Qubits gespeichert, sondern in einem Ensemble einer Mehrzahl von Qubits. Das vereinfacht die Präparation des Datentokens und auch das Auslesen der Informationen apparativ deutlich. Um dennoch ein unautorisiertes Auslesen oder Kopieren zu verhindern, wird die Anzahl der Qubits, die ein Ensemble bilden, so klein gewählt, dass das Quantenprojektionsrauschen ein unautorisiertes Auslesen oder Kopieren verhindert.

Wenn die beim Präparieren eingestellte Ausrichtung der Quantenzustände bekannt ist, kann der Quantenzustand jeder Informationseinheit mit einer einzigen Messung ausgelesen werden.

Wenn die beim Präparieren eingestellte Ausrichtung der Quantenzustände dagegen nicht bekannt ist, werden mindestens zwei Messungen benötigt. Dadurch, dass die Anzahl der Qubits in einem Ensemble einer Informationseinheit so gewählt ist, dass das Quantenprojektionsrauschen bei einem Subensembles der halben Anzahl an Qubits größer ist als eine technisch notwendige Genauigkeit, die zur Auslese dieses Subensambles notwendig ist, ist ein unerkanntes unautorisiertes Auslesen oder Kopieren verhindert. Das Quanten-No-Cloning Theorem als Schutzprinzip wird erfindungsgemäß durch einen Schutz ersetzt, der darauf beruht, dass durch das Quantenprojektionsrauschen ein unerlaubtes Kopieren des Quantentokens nachweisbar wird.

Die Qubits des Quanten-Datentokens sind einem Magnetfeld ausgesetzte Kernspins. Beim Präparieren werden die Kernspins gegenüber einer Magnetfeldachse zum Einstellen des vorbestimmten Quantenzustands geschwenkt und damit ausgerichtet. Ein autorisiertes Auslesen des Quantenzustands erfolgt durch Zurückführen der Kernspins auf die Magnetfeldachse, was möglich ist, wenn die beim Präparieren eingestellte Ausrichtung bekannt ist.

Quantenmechanisch bedeutet dies, dass bezüglich der Quantisierungsachse, die durch das Magnetfeld gegeben ist, ein Basiszustand gemessen wird, der kein Quantenprojektionsrauschen aufweist.

Ist die Ausrichtung dagegen nicht bekannt, verhindert das Quantenprojektionsrauschen eine Ermittlung von Schwenkwinkeln in einer Präzision, die zum Zurückführen der Kernspins auf die Magnetfeldachse benötigt würde.

Das Quanten-Datentoken kann beispielsweise einen Kristall mit einem regelmäßigen Diamantgitter aus Kohlenstoffatomen umfassen, der NV-Zentren aufweist, die jeweils ein Stickstoff-Fremdatom und eine Fehlstelle aufweisen. In dem Fall stellen die NV-Zentren die Qubits dar. Das Präparieren und insbesondere das Ausrichten der Qubits zum Einstellen des vorbestimmten Quantenzustand kann dabei durch eine Bestrahlung des Kristalls mit MikrowellenStrahlung und/oder Licht erfolgen. Bevorzugt wird das Licht mithilfe eines Objektivs selektiv auf Bereiche des Kristalls eingestrahlt, wobei die Qubits in diesem Bereich dann eine Informationseinheit des Datentokens bilden. Eine Informationseinheit kann beispielsweise ein oberflächennaher Zylinder des Kristalls sein, der einen Durchmesser von etwa 100-300 Nanometer (nm) aufweist und eine Höhe von etwas 20 bis 100 nm. In einer Informationseinheit können z.B. zwischen 10 und 100000 NV-Zentren liegen, die das Ensemble bilden.

Mehrere solcher Informationseinheiten können nebeneinander oberflächennah in dem Kristall angeordnet sein, um die beim Datentoken benötigten Informationen aufzunehmen. Dabei werden bevorzugt unterschiedliche Ausrichtungen für die Qubits der mehrere Informationseinheiten eingestellt, um ein zufällig richtiges Kopieren mit einer zufällig gewählten Ausrichtung der Qubits durch einen Angreifer beliebig unwahrscheinlich zu gestalten.

Die Erfindung wird nachfolgend anhand von einem Ausführungsbeispiel mithilfe von Figuren näher erläutert. Die Figuren zeigen:
- Figur 1: eine schematische Darstellung eines Atomgitters, auf dessen Basis ein Quanten-Datentoken aufgebaut werden kann; und
- Figur 2: eine Vorrichtung zum Erzeugen und Auslesen eines Quanten-Datentokens.

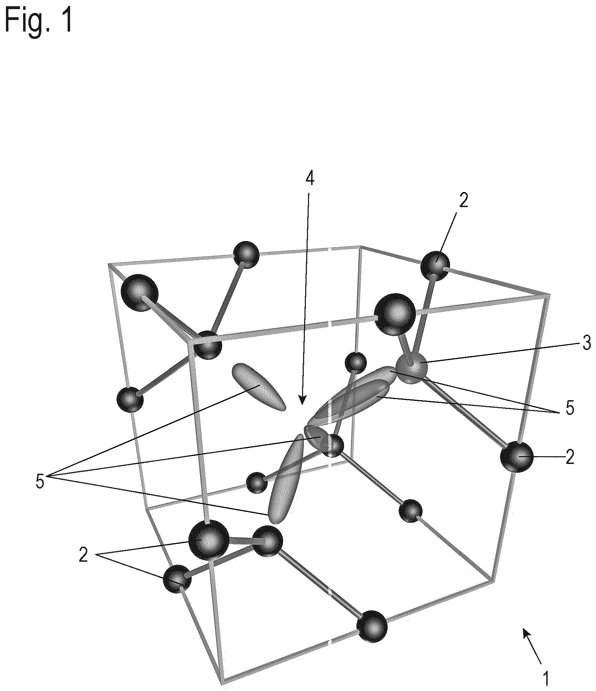

Figur 1 zeigt schematisch einen Ausschnitt aus einem Kristall 1, auf dessen Basis ein Quanten-Datentoken, nachfolgend auch Quantentoken oder Datentoken genannt, erstellt werden kann und mit dem ein anmeldungsgemäßes Verfahren zum Erstellen und Auslesen des Datentokens genutzt werden kann.

Der Kristall 1 ist bevorzugt ein möglichst regelmäßig Festkörpergitter, aufgebaut aus Gitteratomen 2, bevorzugt Kohlenstoffatomen. Im Kristall 1 sind einzelne der Gitteratome 2 durch ein Fremdatom 3 ersetzt, wobei ein dazu eigentlich benachbartes Gitteratom 2 fehlt - es ist also statt des entsprechenden Gitteratoms 2 eine Fehlstelle 4 vorhanden.

Bei einem Kristall 1 aus Kohlenstoffatomen im Diamantgitter wird als Fremdatom 3 häufig Stickstoff eingesetzt und die entstehende Kombination aus zwei gekoppelten Defekten (Fremdatom 3 und Fehlstelle 4) als NV-Zentrum bezeichnet. Im Ausschnitt des Kristalls 1 der Figur 1 eine solches NV-Zentrum vorhanden. Bei einem anmeldungsgemäß als Datentoken eingesetzten Kristall 1 liegt eine Anzahl der NV-Zentren zum Beispiel im Bereich von 10 bis 100000 NV-Zentren in einem Würfel einer Kantenlänge von 100 nm, was einer Dichte von 10¹⁶ bis 10²⁰ x 1/cm³ entspricht. Die Dichte der NV-Zentren im Kristall 1 kann durch entsprechende Dotierung mit den Fremdatomen 3 beim Aufbau des Kristalls 1 aus den Gitteratomen 2 kontrolliert werden. Alternativ kann mit Stickstoff dotierter Diamant verwenden als Ausgangsprodukt verwendet werden und Fehlstellen z.B. mit Femtosekunden-Pulslasern oder durch Elektronenbeschuss erzeugt werden.

In der Figur 1 sind im Bereich der Fehlstelle 4 Valenzelektronen 5 eingezeichnet, die besondere optische Eigenschaften des NV-Zentrums gegenüber dem umgebenden Festkörper des Kristalls 1 bestimmen. Diese besonderen optischen Eigenschaften liegen in den Elektronen-Energieniveaus der Valenzelektronen 5 des NV-Zentrums begründet, die sich von denen des umgebenden Kristallgitters unterscheiden, weswegen das NV-Zentrum auch als Farbzentrum bezeichnet wird.

Durch Hyperfeinwechselwirkung der Elektronenspins der Valenzelektronen 5 mit den Kernspins der umgebenden Atome, also der Gitteratome 2 und/oder des Fremdatoms 3, spalten die Energieniveaus und damit auch die optischen Übergänge der NV-Zentren auf. Ein Kernspinzustand der umgebenden Atome kann auf diese Weise durch optische Spektroskopie an den NV-Zentren detektiert werden.

Zudem können durch gleichzeitige Einstrahlung von Mikrowellenenergie bestimmte Elektronenspinzustände in den Valenzelektronen 5 manipuliert (be- oder entvölkert) werden, die mit Kernspinzuständen koppeln und so eine Manipulation der Kernspinzustände der umgebenden Gitteratome 2 oder des Fremdatom 3 erlauben.

Das NV-Zentrum wird so zu einem Quantensystem, dessen Zustand präpariert und ausgelesen werden kann. In dem Sinne stellt ein NV-Zentrum informationstechnisch ein einzelnes Qubit dar.

Für die Nutzung des Kristalls 1 als anmeldungsgemäßes Quanten-Datentoken wird eine Dichte der NV-Zentren so gewählt, dass eine Mehrzahl an NV-Zentren zusammen ein Ensemble von Qubits bildet, das gemeinsam präpariert wird und gemeinsam ausgelesen werden kann.

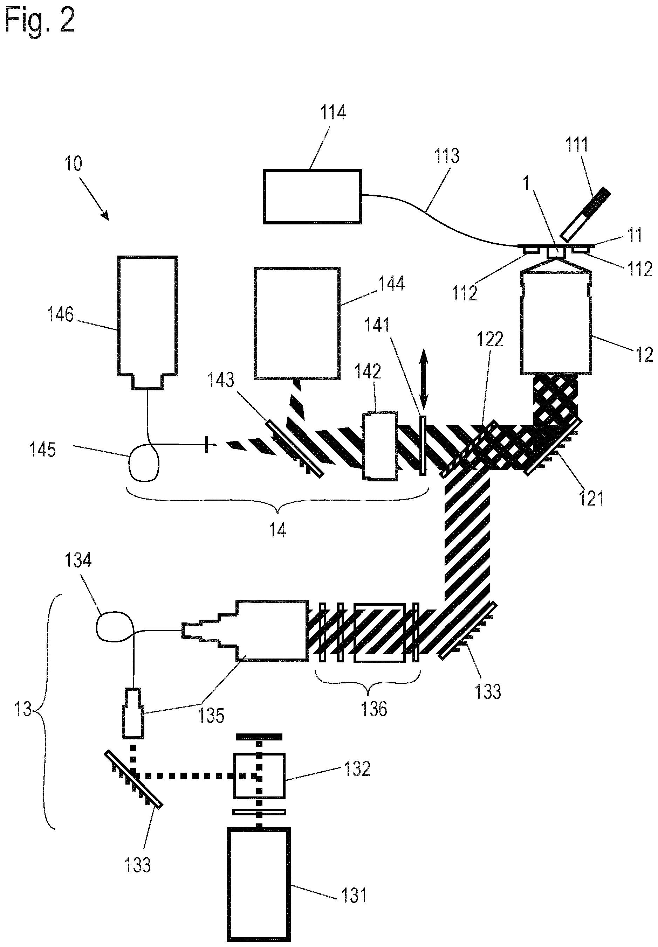

Figur 2 zeigt ein Ausführungsbeispiel einer Präparations- und Ausleseanordnung 10, um den Kristall 1 als Datentoken zu präparieren und/oder auszulesen.

Die Präparations- und Ausleseanordnung 10 umfasst einen Kristallhalter 11, in den der Kristall 1 eingesetzt wird. Im Bereich des Kristallhalters 11 ist ein Magnet 111 angeordnet, der ein in seiner Richtung und Größe definiertes Magnetfeld für den Kristall 1 bereitstellt.

Der Magnet 111 ist schematisch als Stabmagnet dargestellt. Der Magnet 111 kann z.B. ein Permanentmagnet sein. Um eine definierte Magnetfeldstärke und -richtung zu erzielen, kann in einer weiteren Ausgestaltung als Magnet ein Elektromagnet, insbesondere in der Form von einem oder mehreren Helmholtz-Spulenpaar(en) verwendet werden.

Ebenfalls im Bereich des Kristalls 1 weist der Kristallhalter 11 eine oder mehrere Mikrowellenantennen 112 auf, die über einen Mikrowellenleiter 113 mit einem Mikrowellengenerator 114 verbunden sind. Im Betrieb der Präparations- und Ausleseanordnung 10 kann über den Mikrowellengenerator 114 ein kontinuierliches Mikrowellenfeld oder auch eine Pulsfolge von Mikrowellen im Bereich des Kristalls 1 erzeugt werden.

Durch die Mikrowellen kann die Ausrichtung der Qubits gegenüber der Quantisierungsachse geschwenkt werden. Im Bild einer Bloch-Kugel ist ein Quantenzustand als Bloch-Vektor symbolisiert, der vom Zentrum ausgehend auf die Oberfläche der Bloch-Kugel weist. Der zunächst entlang der Quantisierungsachse weisende Bloch-Vektor wird durch die Mikrowellen in um zwei Winkel verschwenkt. Die Information über die Qubitausrichtung wird zum autorisierten Auslesen des Datentokens benötigt und sollte daher geheim gehalten werden und separat von dem Datentoken übertragen bzw. gespeichert werden. Die Ausrichtung der Qubits kann für unterschiedliche Informationseinheiten eines Datentokens und auch von Datentoken zu Datentoken variiert werden.

Der Kristallhalter 11 ist bevorzugt in Form eines verschiebbaren und/oder schwenkbaren Probentisch aufgebaut, um den Kristall 1 geeignet positionieren zu können.

Vor dem Kristall 1 ist ein Objektiv 12 angeordnet, über das anregende Lichtstrahlen auf den Kristall 1 gerichtet werden können und vom Kristall 1 emittierte Fluoreszenzstrahlung erfasst werden kann.

Die Präparations- und Ausleseanordnung 10 weist dazu eine Anregungsoptik 13 auf, zu der ein Laser 131 zählt. Wenn als Kristall 1 ein Diamantkristall aus Kohlenstoffatomen mit Stickstoff-Fremdatomen eingesetzt wird, kann zur Anregung von Übergängen der NV-Zentren beispielsweise ein Laser mit einer Wellenlänge von 514 nm (Nanometern) eingesetzt werden.

Dem Laser 131 ist ein Polarisator, umfassend z.B. eine Lambda/4-Wellenplatte und einen polarisierenden Strahlteiler oder alternativ eine optische Diode, nachgeordnet um Rückkopplung in den Laser zu vermeiden. Aus dem Polarisator 132 ausgekoppeltes Licht wird über verschiedene Spiegel 133, eine Lichtleiterfaser 134 mit entsprechender Ein- bzw. Auskopplung 135 und einen weiteren Polarisator 136 sowie weiter über einen Strahlteiler 122 und einen Spiegel 121 auf das Objektiv 12 und damit den Kristall 1 geleitet. Der weitere Polarisator 136 wird eingesetzt, da die hier verwendete Lichtleiterfaser 134 Polarisation nicht erhält. In alternativen Ausführungen der Präparations-Ausleseanordnung 10 kann gegebenenfalls auf die Lichtleiterfaser 134 und den Polarisator 136 verzichtet werden. Ebenfalls können alternativ polarisationserhaltende Lichtleiterfasern eingesetzt werden. Auch Anordnung der Spiegel 133 und 121 und des Strahlteilers 122 ist beispielhaft

Weiter umfasst die Präparations- und Ausleseanordnung 10 eine Ausleseoptik 14, mit der von dem Kristall 1 emittiertes Fluoreszenzlicht ausgewertet werden kann. Das vom Kristall 1 emittierte Licht wird durch das Objektiv 12 und den Spiegel 121 auf den Strahlteiler 122 gelenkt und mit zumindest einem Anteil zu der Ausleseoptik 14 durchgelassen. Bei Verwendung des zuvor beschriebenen Kristalls 1 als Diamantgitter mit Stickstoff-Fremdatomen liegt das von den NV-Zentren emittierte Fluoreszenzlicht im roten Spektralbereich.

Die Ausleseoptik 14 umfasst einen gegebenenfalls verschiebbaren und austauschbaren Filter 141 und eine Tubuslinse 142, die das vom Objektiv 12 erfasste Licht über einen Klappspiegel 143 in eine Kamera 144 abbildet.

Die Kamera 144 dient einer exakten lateralen Positionierung des Kristalls 1 sowie zum Einstellen des korrekten Fokus-Abstands zwischen dem Objektiv 12 und dem Kristall 1. Um eine qualitative Analyse des emittierten Fluoreszenzlichts zu ermöglichen, kann in einer entsprechenden Position des Klappspiegels 143 das Fluoreszenzlicht in eine Faseroptik 145 und letztlich auf eine Photodiode 146 geleitet werden. Um eine ausreichende Empfindlichkeit zu erzielen, kann als Photodiode 146 eine Avalanche-Photodiode eingesetzt werden.

Anmeldungsgemäß wird zum Präparieren und auch zum Auslesen des Kristalls 1 eine Dichte an NV-Zentren im Vergleich zur Größe des vom Objektiv 12 erfassten Bereichs auf dem Kristall 1 so gewählt, dass nicht ein einzelnes NV-Zentrum als einzelnes Qubit analysiert bzw. präpariert wird, sondern ein Ensemble von einer Vielzahl von NV-Zentren, also einer Vielzahl von Qubits. Ein Ensemble bildet jeweils eine Informationseinheit des Datentokens, stellt also z.B. ein Bit an Information dar. Mehrere derartige Ensembles können beispielsweise nebeneinander auf der Oberfläche des Kristalls 1 präpariert werden und bilden entsprechend mehrere Informationseinheiten des Datentokens. Bevorzugt werden diese Informationseinheiten dann auch unter Nutzung unterschiedlicher Ausrichtungen der Qubits präpariert.

Ein derartig als Datentoken präparierter Kristall 1 kann wie ein Schlüssel transportiert werden, und an seinem Zielort wiederum ausgelesen werden, wobei eine vergleichbare Präparations- und Ausleseanordnung 10, beispielsweise wie in Figur 2 dargestellt, eingesetzt wird. Dabei ist zu berücksichtigen, dass der Kristall 1 permanent einem Magnetfeld ausgesetzt bleibt, um die Polarisationsinformation der Kernspins der Qubits zu erhalten.

Der jeweilige Quantenzustand einer Informationseinheit auf dem Datentoken erstellt eine Überlagerung der Quantenzustände der einzelnen Qubits, also der einzelnen NV-Zentren, die zum Ensemble zählen, dar.

Die Auslese geschieht durch Rückrotation der Kernspins auf die Quantisierungsachse, z.B. durch eine geeignete Mikrowellen-Pulssequenz. Wird die Rückrotation aus Unkenntnis nicht passend durchgeführt, ist die Auslese einem Quantenprojektionsrauschen unterworfen.

Wenn die beim Präparieren eingestellte Ausrichtung der Quantenzustände bekannt ist, kann der Quantenzustand jeder Informationseinheit mit einer einzigen Messung ausgelesen werden. Dazu werden zuerst die Qubits auf die Quantisierungsachse zurückrotiert, was wiederum durch eine geeignete Mikrowellen-Pulssequenz erfolgt. Dann kann der Zustand ausgelesen werden. Ein Quantenprojektionsrauschen tritt dabei nicht auf.

Wenn die beim Präparieren eingestellte Ausrichtung der Quantenzustände dagegen nicht bekannt ist, werden zwei Messungen benötigt, da ein Quantenzustand durch zwei Winkel seines Bloch-Vektors beschrieben werden kann. Da die Qubits in dem Fall nicht entlang der Quantisierungsachse ausgerichtet sind, unterliegt diese Messung - anders als das autorisierte Auslesen - dem Quantenprojektionsrauschen. Da jede durchgeführte Messung die Ausrichtung des Ensembles zerstört, können zudem nicht zwei Messungen am gesamten Ensemble durchgeführt werden.

Anmeldungsgemäß wird die Anzahl N der Qubits in einem Ensemble einer Informationseinheit gerade so gewählt, dass das Quantenprojektionsrauschen bei einem Subensembles der halben Anzahl N/2 an Qubits größer ist als eine technisch erreichbare Genauigkeit bei der Auslese des Ensembles erreicht wird.. Das Quantenprojektionsrauschen bewirkt, dass das auf die Anzahl der Qubits normierte Signal zu Rauschverhältnis proportional mit N^{(-1/2)}, also proportional mit 1/Wurzel(N), skaliert.

Die Anzahl der Qubits in einem Ensemble wird also so gewählt, dass das Quantenprojektionsrauschen bei Messungen an zwei Subensembles zu groß ausfallen würde.

Durch die entsprechende Auswahl der Ensemblegröße wird sichergestellt, dass nur eine einzige aussagekräftige Messung am gesamten Ensemble durchgeführt werden kann. Bei nicht bekannter Ausrichtung der Qubitzustände, reicht eine Messung nicht aus, um den Informationsgehalt des Ensembles und damit der entsprechenden Informationseinheit des Datentokens auszulesen. Bei bekannter Ausrichtung können dagegen zuerst die Qubits auf die Quantisierungsachse zurückrotiert werden und dann kann ihr Zustand, also die gewünschte Information der Informationseinheit, unter Umgehung des Quantenprojektionsrauschens ausgelesen werden.

Um auch ohne Kenntnis der Qubitausrichtung an die im Datentoken enthaltenen Information zu gelangen, könnte versucht werden, das Ensemble in zwei oder mehr Teile zu unterteilen und diese Teile separat auszulesen. Aufgrund der gewählten Größe des Ensembles ist jede Untereinheit jedoch zu klein (hat also zu wenig einzelnen Qubits) um in Anbetracht des Quantenprojektionsrauschen die Informationen mit der erforderlichen Präzision zu kopieren. Beim Auslesen wird die Information zusätzlich verrauscht und kann daher nicht exakt genug kopiert werden.

Zusammenfassend wird durch die gewählte Größe des Ensembles, also die Anzahl N an Qubits bzw. an NV-Zentren, ein nicht-autorisiertes Auslesen und auch ein nicht-autorisiertes Kopieren des Datentokens verhindert.

### Bezugszeichen

- 1: Kristall
- 2: Gitteratom
- 3: Fremdatom
- 4: Fehlstelle
- 5: Valenzelektron

- 10: Präparations- und Ausleseanordnung

- 11: Kristallhalter
- 111: Magnet
- 112: Mikrowellenantenne
- 113: Mikrowellenleiter
- 114: Mikrowellengenerator

- 12: Objektiv
- 121: Spiegel
- 122: Strahlteiler

- 13: Anregungsoptik
- 131: Laser
- 132: Polarisator
- 133: Spiegel
- 134: Lichtleiterfaser
- 135: Einkopplung
- 136: weiterer Polarisator

- 14: Ausleseoptik
- 141: Filter
- 142: Tubuslinse
- 143: Klappspiegel
- 144: Kamera
- 145: Faseroptik
- 146: Photodiode

## Patentansprüche

1. Verfahren zum Erstellen eines Quanten-Datentokens auf Basis eines Systems mit einer Vielzahl von Qubits, wobei jeweils eine Anzahl (N) von Qubits der Vielzahl von Qubits zu einem Ensemble zusammengefasst wird und eine Informationseinheit bildet und wobei die Qubits des Quanten-Datentokens einem Magnetfeld ausgesetzte Kernspins sind und die einzelnen Qubits des Ensembles jeweils in genau einen vorbestimmten gleichen Quantenzustand gebracht werden, **dadurch gekennzeichnet, dass** die Anzahl (N) von Qubits in einem Ensemble so gewählt ist, dass ein Quantenzustand eines Subensembles, das maximal die Hälfte der Qubits des Ensembles aufweist, aufgrund des Quantenprojektionsrauschens nicht bestimmbar ist, wobei die Kernspins gegenüber einer Magnetfeldachse zum Einstellen des vorbestimmten gleichen Quantenzustands geschwenkt werden, wobei ein Auslesen des Quantenzustands durch Zurückführen der Kernspins auf die Magnetfeldachse erfolgt und wobei das Quantenprojektionsrauschen eine ausreichend präzise Ermittlung von Schwenkwinkeln, die zum Zurückführen der Kernspins auf die Magnetfeldachse benötigt würden, an dem Subensemble verhindert.

2. Verfahren nach Anspruch 1, bei dem das Quanten-Datentoken ein Kristall (1) mit einem regelmäßigen Diamantgitter aus Kohlenstoffatomen ist, der NV-Zentren aufweist, die jeweils ein Stickstoff-Fremdatom (3) und eine Fehlstelle (4) aufweisen.

3. Verfahren nach Anspruch 2, bei dem ein Qubit einem NV-Zentrum entspricht und bei dem das Ensemble die Anzahl (N) von NV-Zentren aufweisen.

4. Verfahren nach Anspruch 2 oder 3, bei dem das Einstellen des vorbestimmten gleichen Quantenzustand durch eine Bestrahlung des Kristalls (1) mit Mikrowellen-Strahlung und/oder Licht erfolgt.

5. Verfahren nach Anspruch 4, bei dem das Licht mithilfe eines Objektivs (11) selektiv auf Bereiche des Kristalls (1) eingestrahlt wird, wobei die Qubits in diesem Bereich eine Informationseinheit bilden.

6. Verfahren nach einem der Ansprüche 2 bis 5, bei dem mehrere solcher Informationseinheiten nebeneinander oberflächennah in dem Kristall (1) angeordnet sind.

7. Verfahren nach Anspruch 6, bei dem unterschiedliche Ausrichtungen für die Qubits der mehreren Informationseinheiten eingestellt werden.

## Claims

1. A method for creating a quantum data token based on a system comprising a plurality of qubits, wherein a number (N) of qubits from the plurality of qubits are combined into an ensemble and form an information unit, and wherein the qubits of the quantum data token are nuclear spins exposed to a magnetic field, and the individual qubits of the ensemble are each brought into exactly one predetermined identical quantum state, **characterized in that** the number (N) of qubits in an ensemble is selected such that a quantum state of a sub-ensemble comprising at most half of the qubits of the ensemble cannot be determined due to quantum projection noise, wherein the nuclear spins are rotated relative to a magnetic field axis to set the predetermined identical quantum state, wherein the quantum state is read out by returning the nuclear spins to the magnetic field axis, and wherein the quantum projection noise prevents sufficiently precise determination of the tilt angles required to return the nuclear spins to the magnetic field axis in the sub-ensemble.

2. A method according to claim 1, wherein the quantum data token is a crystal (1) with a regular diamond lattice of carbon atoms, which comprises NV centers, each comprising a nitrogen impurity atom (3) and a vacancy (4).

3. A method according to claim 2, wherein one qubit corresponds to one NV center and wherein the ensemble comprises the number (N) of NV centers.

4. A method according to claim 2 or 3, wherein the setting of the predetermined identical quantum state is achieved by irradiating the crystal (1) with microwave radiation and/or light.

5. A method according to claim 4, wherein the light is selectively irradiated onto regions of the crystal (1) using a lens (11), wherein the qubits in this region form an information unit.

6. A method according to any one of claims 2 to 5, wherein multiple of such information units are arranged side by side near the surface in the crystal (1).

7. A method according to claim 6, wherein different orientations are set for the qubits of the multiple information units.

## Revendications

1. Procédé de génération d'un jeton de données quantique basé sur un système comprenant plusieurs qubits, dans lequel un certain nombre (N) de qubits parmi les plusieurs qubits sont réunis dans un ensemble respectif et forment une unité d'information et dans lequel les qubits du jeton de données quantique sont des spins nucléaires exposés à un champ magnétique et les différents qubits de l'ensemble sont amenés chacun dans exactement un même état quantique prédéterminé, **caractérisé en ce que** le nombre (N) de qubits dans un ensemble est choisi de telle manière qu'un état quantique d'un sous-ensemble comprenant au maximum la moitié des qubits de l'ensemble ne puisse pas être déterminé à partir du bruit de projection quantique, dans lequel les spins nucléaires sont basculés par rapport à un axe de champ magnétique pour établir le même état quantique prédéterminé, dans lequel une lecture de l'état quantique est effectuée en ramenant les spins nucléaires vers l'axe de champ magnétique et dans lequel le bruit de projection quantique empêche une détermination suffisamment précise des angles de bascule qui seraient nécessaires pour ramener les spins nucléaires vers l'axe de champ magnétique dans le sous-ensemble.

2. Procédé selon la revendication 1, dans lequel le jeton de données quantique comporte un cristal (1) possédant une structure diamant régulière composée d'atomes de carbone, qui comporte des centres NV présentant chacun un atome d'azote d'impureté (3) et un défaut ponctuel (4).

3. Procédé selon la revendication 2, dans lequel un qubit correspond à un centre NV et dans lequel l'ensemble comporte le nombre (N) de centres NV.

4. Procédé selon la revendication 2 ou 3, dans lequel l'établissement du même état quantique prédéterminé est réalisé par exposition du cristal (1) à des micro-ondes et/ou à une lumière.

5. Procédé selon la revendication 4, dans lequel la lumière est diffusée sélectivement sur des zones du cristal (1) à l'aide d'un objectif (11), les qubits formant une unité d'information dans cette zone.

6. Procédé selon l'une des revendications 2 à 5, dans lequel plusieurs unités d'information de ce type sont disposées les unes à côté des autres près de la surface dans le cristal (1).

7. Procédé selon la revendication 6, dans lequel différentes orientations peuvent être établies pour les qubits des plusieurs unités d'information.
